Europäisches Patentamt

European Patent Office

Office européen des brevets

(11) Publication number: **0 203 766**
**B1**

(12) **EUROPEAN PATENT SPECIFICATION**

(45) Date of publication of patent specification: **01.08.90**

(51) Int. Cl.⁵: **A 23 K 1/12,** A 23 K 1/22

(21) Application number: **86303793.3**

(22) Date of filing: **19.05.86**

(54) Treatment of lignocellulosic material.

(30) Priority: **21.05.85 GB 8512817**
**14.10.85 GB 8525272**

(43) Date of publication of application:
**03.12.86 Bulletin 86/49**

(45) Publication of the grant of the patent:
**01.08.90 Bulletin 90/31**

(84) Designated Contracting States:
**BE DE FR IT NL SE**

(56) References cited:
**EP-A-0 144 930**
**CH-A- 633 685**
**DD-A- 94 124**
**DE-A-2 707 785**
**GB-A-2 103 916**
**US-A-4 064 276**

**The file contains technical information**
**submitted after the application was filed and**
**not included in this specification**

(73) Proprietor: **BROTHERTON CHEMICALS LIMITED**
**Calder Vale Road**
**Wakefield West Yorkshire, WF1 5PH (GB)**
(73) Proprietor: **THE ANIMAL AND GRASSLAND**
**RESEARCH INSTITUTE**
**Hurley**
**Maidenhead Berkshire SL6 5LR (GB)**

(72) Inventor: **Mason, Victor C. c/o The Animal and**
**Grassland**
**Research Institute Hurley**
**Maidenhead Berkshire SL6 5LR (GB)**

(74) Representative: **Harrison, Michael Robert et al**
**Urquhart-Dykes & Lord 5th Floor Tower House**
**Merrion Way**
**Leeds, LS2 8PA (GB)**

Courier Press, Leamington Spa, England.

**Description**

This invention relates to processes for treating straws, hays, whole crop cereals, grains and other lignocellulose plant material to conserve or improve the feed/food value of the material. Although reference will be made hereinafter mainly to straw, it should be understood that this invention may relate to other lignocellulose materials.

It is known that the feed value of mature forages can be improved by treatment with ammonia. Added ammonia increases the nitrogen content of the crop, and, under alkaline conditions, breaks bonds between aromatic and hemicellulose compounds within the plant cell walls, thereby increasing the nutritional value. Ammonia also has important preservation properties under aerobic and anaerobic conditions when applied to materials containing 60% dry matter or more.

Various processes have been proposed for treating straw with ammonia. Recently published patent specifications include GB 2082039, GB 2094127, GB 2122864, US 4064276 and US 4450178, in all of which the source of ammonia is liquid ammonia typically maintained under pressure in a tank. GB 2124066 discloses a process in which the source of ammonia is an aqueous solution of ammonium hydroxide. There is also a reference to the use of an ammonium salt in the dry state or in aqueous solution but no examples of suitable salts are given. Another recently published patent specification is GB 2103916 which discloses the treatment of straw with a dry mixture of:

(a) a particulate mixture of urea and a solid acidic substance; and

(b) a particulate mixture of urease or a urease-containing material and a solid alkaline substance; the particles for at least one of (a) or (b) being provided with a protective coating comprising an organic hydrophobic liquid.

An example of the use of ammonia as a source of supplementary non-protein nitrogen is available in regions where the maize crop is economically important. In this situation anhydrous ammonia is often added to the maize crop just prior to ensilage in the form of a super-cooled liquid (USS cold-flo system).

Likewise, several scientific publications describe the use of anhydrous ammonia or urea to preserve moist hay or grains, ammonia having been shown to restrict the growth of bacteria, yeasts and moulds, reduce actinomycete counts and detoxify aflotoxin.

The problems with the use of liquid ammonium under pressure or aqueous ammonia hydroxide are concerned with the expense of these materials and the difficulty in handling them. The published methods, including recent methods disclosed in the above-mentioned patent specifications, require the use of skilled personnel to carry out the processes and in particular to handle the dangerous and/or toxic materials. Furthermore, special equipment, such as pressurised vessels, is required.

The treatment of straw with ammonia would be a more attractive proposition to farmers if the materials used were cheaper, and preferably also if the processes could be carried out by the farmer himself and without special equipment.

According to the present invention there is provided a method of increasing the nutritional value of an animal feedstuff which is essentially lignocellulose material, the method comprising providing a dry, particulate mixture of an ammonium salt and a base, bringing said mixture into proximity with said material, and allowing said mixture to react at ambient temperature to produce ammonia, whereby said ammonia contacts said material to effect nutritional upgrading thereof. The residual chemicals may function as valuable mineral supplements when presented with treated feeds, or as fertilisers when added to soil.

Processes of the present invention may be used to enhance the feed value of the lignocellulosic material, through improvements in the digestibility of organic matter, through preservation and conservation of the material against microbial attack, through increases in the nitrogen content of the material and, in one embodiment of the invention, through supplementation of the material with essential minerals. Furthermore, enhancement of the properties of the chemical residue may permit its use as a mineral supplement for animal feeds or as a fertiliser or other soil-enhancing medium.

The ammonium salt used in the present invention may be a volatile salt such as ammonium carbonate or bicarbonate or it may be a non-volatile salt such as ammonium sulphate or phosphate. A mixture of salts may be used. However, volatile salts give off ammonia all the time and for this reason non-volatile salts are to be preferred.

The preferred base is calcium oxide although other suitable bases may be used, examples being sodium hydroxide, potassium hydroxide and calcium hydroxide.

A preferred composition for many upgrading methods comprises ammonium sulphate and calcium oxide or quicklime, this particular combination being particularly effective in producing ammonia, being simple to store and handle, and being a particularly cheap combination of materials.

When the nature of the anion in the chemical residue is of biological importance, other ammonium salts, such as ammonium bicarbonate, ammonium carbonate, ammoium carbamate and the ammonium salts of phosphoric acid, may be used. Urea treatments for upgrading purposes may be improved when the carbon dioxide, produced by hydrolysis of urea, is bound by reaction with akali.

When the nature of the cation in the chemical residue is of biological or chemical importance, other bases, such as sodium hydroxide, potassium hydroxide and calcium hydroxide may be used.

Preferably the materials for producing the ammonia are initially in dry particulate form and may be, for instance, in the form of a mixture. More preferably, the mixture is one of ammonium sulphate and quicklime, the ammonium sulphate being in the form of small crystalline particles and the quicklime being in the form of a finely divided powder. It is not necessarily critical for the ammonium sulphate to be finely divided since it is water soluble. Another example may be a mixture of ammonium sulphate, diammonium hydrogen ortho-phosphate and a stoichiometric excess of quicklime or other base.

The materials to produce the ammonia may, however, be used in different forms. For instance, the ammonium salt may be in the form of a solid whereas the alkali may be a liquid alkali.

The materials to produce the ammonia may be used in approximately their stoichiometric amounts. For instance, in the case of ammonium sulphate and quicklime, the molar ratio of the salt to the alkali may be in the range of from 1:1.2 to 1:1.3. Typically the ammonium sulphate would be used in an amount of about 65% by weight and quicklime in an amount of about 35% by weight. The amount of total chemical used would be determined by the desired ratio of ammonia:lignocellulosic material dry matter and might satisfy the requirements for the provision of about 35 g ammonia per kg forage dry matter for upgrading or about 20 g ammonia per kg forage dry matter for preservation.

Other considerations, such as optimal supplementation with minerals, may modify the amount of total chemical used. Furthermore, it may be preferred to use one of the chemicals in greater stoichiometric ranges than that mentioned above, for instance, to leave a significant amount of a particular element in the residue to act as a mineral supplement or fertiliser.

A method in accordance with the present invention may involve the addition of water as a co-reactant to the ammonium salt and the alkali. Where water is so used, then preferably it is used in an amount of at least 65% by weight based on the total weight of ammonium salt and alkali.

Alternatively the ammonium salt and the alkali may be contacted together and mixed with moist straw or crop, the evolution of ammonia for certain non-volatile ammonium salts then occurring as a result of the reaction of the admixed materials with water present as moisture in the crop. Extra water may be added if necessary. With volatile ammonium salts some ammonia will be released by decomposition of the ammonium salt.

The process may be carried out in a number of different ways. In one embodiment of the present invention, designed principally for upgrading or nitrogen supplementation, the ammonium salt and the alkali may be located in a container, together with an approximate amount of water. This is located in close proximity to the straw to be treated, under an air-tight cover (for instance, sealed in plastic bags or by stretch wrapping), in a sealed box or in a sealed building. This is a particularly simple method of carrying out a process of the invention. The farmer or other user can be supplied with sacks of the individual reactants or of a mixture of the reaction solids and may easily carry out the method without the need for specialist assistance or for special equipment. With this method the upgrading or ammoniation process will be effected over a period of perhaps about three to eight weeks depending upon the ambient conditions. The residue is used as a fertiliser or mineral supplement or 'lick', the value of which is determined by the nature of the chemicals used. A variation of this embodiment involves the addition of quicklime or other alkali to the hydrolysate resulting from the hydrolysis of urea with urease, the released carbon dioxide being bound in the form of a salt by reaction with the alkali.

In a further embodiment in accordance with the present invention the reactants are sprinkled onto the moist straw or crop without the addition of extra water. In this case the object may be that of upgrading, conservation and/or mineral supplementation, the choice of ammonium salt, of alkali and of other mineral supplement taking into consideration the economic, the preservation and the nutritional implications when all or part of the straw or crop is to be used as feed for livestock, food for humans or fertiliser or other soil enhancing medium.

The present invention will now be further described in the following Examples.

Example I

Samples of chopped barley straw (cv Sonja) were treated in Kilner jars with ammonia (35 g.kg$^{-1}$ straw DM) released from these chemicals by volatilization and/or by reaction with a stoichiometric excess of quicklime or slaked lime in the presence or absence of added water. In all cases the chemicals and added water were placed or mixed in a small glass vial within the Kilner jar, such that only gases or water vapour could come into direct contact with the straw. Half the jars for all treatments were then stored at 20°C for 5 weeks simulating a stack treatment, the remainder being held at 90°C for 15 h to simulate an oven treatment.

Tables 1 and 2 present estimates *in vitro* organic matter digestibility for processes occurring in the absence or presence of water, respectively. In the absence of water, heating the volatile salts to 90°C for 15 h gave improvements in digestibility which were similar or slightly inferior to those obtained with the positive ammonia controls, but under these conditions ammonium sulphate gave little or no improvement. In contrast, at 20°C prolonged storage of straw in the presence of the potentially volatile salts gave responses which were no more effective than those achieved with ammonium sulphate. Furthermore, the results achieved with anhydrous ammonia tended to be inferior to those obtained with aqueous ammonia. The effect of lime was inconsistent.

In the presence of added water (Table 2), the situation changed, ammonium sulphate giving efficient upgrading when mixed with quicklime or slaked lime and stored under simulated stack or oven conditions. Moreover, at 20°C both 'carbonate' treatments gave satisfactory improvements when lime was included in the process. The results clearly indicate the use of both volatile and non-volatile ammonium salts for upgrading straw.

Example II

This Example is concerned with *in vitro* digestibility studies, with, respectively, sheep and cattle. For the sheep trials (Table 3), baled perennial ryegrass hay (cv Cropper) of medium quality (c. 1.5% N) was chopped and fed, untreated, or subsequent to ammoniation by one of four techniques. In the first, c. 440 kg hay DM was treated with anhydrous ammonia (35 g $NH_3$ $kg^{-1}$ hay DM; 90°C for 15 h) in a purpose-built, insulated An-Stra-Verter oven, the ammonia being provided from an external pressure tank. The second and third techniques were stack methods in which similar principles were applied to treat c.465 kg hay DM with ammonia (35 g.$kg^{-1}$ DM). In these, dry mixtures of 63 kg ammonium sulphate fertilizer and 33 kg quicklime or 44 kg ammonium 'carbonate' (c. 310 g $NH_3$ $kg^{-1}$ DM) and 33 kg quicklime were treated with 60 and 50 kg water, respectively, in metal troughs placed close to the stack under the plastic sheeting. With both stack methods ammoniation proceeded at ambient temperature over 8 weeks during July and August. The digestibility trial was conducted on Suffolk halt-bred wethers (c. 44 kg LW), 6 animals per treatment, each study consisting of a 16-day preliminary and a 10-day collection period. All hays were fed *ad libitum*, each animal also receiving a daily pelleted supplement providing 1.4 g soyabean meal, 0.5 g mineral-vitamin mixture and 0.1 g sodium sulphate $kg^{-1}$ LW. Water was available at all times.

As shown in Table 3, the two stacks methods improved the digestibility of organic matter almost as efficiently as did the conventional oven-ammonia method. However, intakes for these treatments were inferior to those for the conventional method though superior to those for the control.

For the cattle studies (Table 4), baled winter barley straw (cv. Ingri) was fed untreated or subsequent to upgrading by one of three techniques. In the first, 500 kg straw DM was treated with anhydrous ammonia (35 g.$kg^{-1}$ DM) by the conventional An-Stra-Verter oven method, discussed above. The second was a stack method similar to those used in the sheep studies, but differing by treating a mixture of 66 kg ammonium sulphate fertilizer and 35 kg quicklime with 60 kg water to generate maximally 17 kg ammonia to upgrade 500 kg straw DM. In the third approach, straw was treated with sodium hydroxide (50 g.$kg^{-1}$ straw DM) using a J. F. Straw Processor, and then ensiled. The digestibility trial involved 4 British Friesian steers of c. 248 kg LW, tethered in individual standings. These were given each of the four test straws (2.8 kg $d^{-1}$) according to a randomised Latin Square sequence, each fed together with rolled barley (1.8 kg $d^{-1}$) and fishmeal (0.2 kg $d^{-1}$) in diets designed to satisfy c. 1.3 times the maintenance requirements for energy. The unreated and NaOH-treated straw diets were further supplemented with c. 40 g urea $d^{-1}$ to equalize the nitrogen intakes. Water was available at all times. Each trial consisted of a 21-day preliminary and a 5-day collection period.

Table 4 shows that in this experiment, where intakes were standardized, the stack method gave an improvement in digestibility which was very similar to that achieved with the conventional ammonia oven method. In the case of organic matter this improvement was also close to that obtained with the J. F.-ensilage approach. In view of the high content of concentrate feeds in these diets, the improvements achieved were satisfactory.

In general, the above Examples demonstrate that ammonium salts, including fertilizers, can be used as a source of ammonia for upgrading and, supposedly, preservation. The troughs used as reaction vessels in the stack treatments were rather inefficient since they provided no means for mixing the residues subsequent to the addition of water. This meant that ammonia produced in the base of each trough had difficulty in escaping to the surface of the residue.

## TABLE 1

### Upgrading Barley Straw (cv. Sonja) Using Different Ammonia Sources* (No Water Added)

(OMD *in vitro*; g $kg^{-1}$)

| Conditions | Base | No $NH_3$ | Aq.$NH_3$ | NH$_3$ Source $(NH_4)_2CO_3$+ | $NH_4HCO_3$++ | $(NH_4)_2SO_4$ |
|---|---|---|---|---|---|---|
| 90°C ) | ( – | 329 | 432 | 376 | 411 | 303 |
| 15 hours) – | –( CaO | 364 | 458 | 408 | 401 | 324 |
|  | ( Ca(OH)$_2$ | 319 | 432 | 435 | 420 | 349 |
| 20°C ) | ( – | 315 | 433 | 339 | 338 | 322 |
| 5 weeks ) – | –( CaO | 325 | 426 | 349 | 323 | 325 |
|  | ( Ca(OH)$_2$ | 301 | 455 | 379 | 362 | 350 |

*   Rates, $kg^{-1}$ straw DM: 0 g $H_2O$; 35 g $NH_3$; 0,70 g CaO or 92.5 g Ca(OH)$_2$

+   $(NH_4)_2CO_3$ = carbamate/bicarbonate mixture

++   Lime and water rates doubled

SED   (Standard error of difference) = 23.5

OMD = organic matter digestibility

## TABLE 2

### Upgrading Barley Straw (cv. Sonja) Using Different Ammonia Sources* (Water Added)

### (OMD *in vitro*; g $kg^{-1}$)

| Conditions | Base | No $NH_3$ | Aq.$NH_3$ | $(NH_4)_2CO_3$+ | $NH_4HCO_3$++ | $(NH_4)_2SO_4$ |
|---|---|---|---|---|---|---|
| 90°C )_ | ( – | 283 | 442 | 467 | 418 | 327 |
| 15 hours)‾ –( CaO | | 294 | 427 | 450 | 453 | 438 |
| ( Ca(OH)$_2$ | | 296 | 434 | 449 | 443 | 442 |
| 20°C )_ | ( – | 311 | 440 | 374 | 362 | 344 |
| 5 weeks )‾ –( CaO | | 332 | 479 | 431 | 453 | 464 |
| ( Ca(OH)$_2$ | | 324 | 466 | 406 | 478 | 473 |

\*     Rates, $kg^{-1}$ straw DM: <u>120 g $H_2O$</u>; 35 g $NH_3$; 0,70 g CaO or 92.5 g Ca(OH)$_2$

\+     $(NH_4)_2CO_3$ = carbamate/bicarbonate mixture

++    Lime and water rates doubled

SED    (Standard error of difference) = 23.5

OMD = organic matter digestibility

EP 0 203 766 B1

## TABLE 3

### Upgrading Perennial Ryegrass (cv. Cropper) Hay By Ammoniation For Sheep*

| Method | N-Source | OMD, $g\ kg^{-1}$ | OMI, $g\ kg^{-1}$ LW | DOMI, $g\ kg^{-1}$ LW | N-retn. $g\ d^{-1}$ |
|---|---|---|---|---|---|
| Untreated | – | 636 | 18.4 | 11.7 | 0.93 |
| Oven-$NH_3$ | Anh.$NH_3$ | 690 | 22.4 | 15.5 | 3.75 |
| Stack-$NH_3$ | $(NH_4)_2CO_3$+ | 671 | 21.2 | 14.2 | 3.67 |
| Stack-$NH_3$ | $(NH_4)_2SO_4$ | 680 | 20.2 | 13.8 | 3.77 |
| | SED | 10.0 | 1.14 | 0.69 | 0.56 |

\* All animals received supplement containing 1.4g soyabean meal, 0.5 g.min.-vit. mix and 0.1 g $Na_2SO_4$ kg-1 LW

+ Ammonium carbamate/bicarbonate mixture

OMD = organic matter digestibility

OMI = organic matter intake

DOMI = digestible organic matter intake

## TABLE 4

### Upgrading Winter Barley Straw (cv. Igri) For Cattle*

| Method | Chemical | OMD, $g.kg^{-1}$ | DMD, $g.kg^{-1}$ |
|---|---|---|---|
| Untreated | – + | 668 | 639 |
| Oven-$NH_3$ | Anh.$NH_3$ | 725 | 669 |
| Stack-$NH_3$ | $(NH_4)_2SO_4$ | 722 | 670 |
| Silo-JF | NaOH+ | 730 | 705 |
| | SED | 7.4 | 10.9 |

\*    Ration: 2.8 kg straw, 1.8 kg rolled barley, 0.2 kg fishmeal (1.3 x M)

\+    Supplement: 40 g urea

OMD = organic matter digestibility

DMD = dry matter digestibility

## EP 0 203 766 B1

**Claims**

1. A method of increasing the nutritional value of an animal feedstuff which is essentially lignocellulosic material, the method comprising providing a dry, particulate mixture of an ammmium salt and a base, bringing said material into proximity with said material, and allowing said mixture to react at ambient temperature to produce ammonia, whereby said ammonia contacts said material to effect nutritional upgrading thereof.

2. A method according to claim 1, further characterised in that water is added as a co-reactant to the ammonium salt and the base.

3. A method according to claim 2, further characterised in that which the amount of water added is at least 65% by weight based on the total weight of ammonium salt and base.

4. A method according to claim 1, further characterised in that the ammonium salt and the base are contacted together and mixed with moist lignocellulosic material.

**Patentansprüche**

1. Verfahren zur Steigerung des Nährwertes eines Futtermittels für Tiere, welches im wesentlichen ein Lignocellulose-Material ist, wobei das Verfahren folgendes umfaßt:

Bereitstellen einer trockenen, aus Partikeln bestehenden Mischung eines Ammoniumsalzes und einer Base.

Zusammenbringen der Mischung mit dem Lignocellulose-Material und

Reagierenlassen dieser Mischung bei Raumtemperatur zur Erzeugung von Ammoniak, wobei Ammoniak mit dem Lignocellulose-Material Kontakt bekommt, um dessen Nährwertsteigerung zu bewirken.

2. Verfahren nach Anspruch 1, dadurch gekennzeichnet, daß Wasser als Co-Reaktant zu dem Ammoniumsalz und der Base zugegeben wird.

3. Verfahren nach Anspruch 2, dadurch gekennzeichnet, daß die Menge an zugegebenem Wasser mindestens 65 Gew.-% beträgt, bezogen auf das Gesamtgewicht von Ammoniumsalz und Base.

4. Verfahren nach Anspruch 1, dadurch gekennzeichnet, daß das Ammoniumsalz und die Base mit miteinander in Kontakt gebracht und mit feuchtem Lignocellulose-Material vermischt werden.

**Revendications**

1. Procédé pour accroître la valeur nutritionnelle d'un aliment pour animaux, qui est une matière essentiellement lignocellulosique, procédé qui consiste à prendre un mélange sec en particules d'un sel d'ammonium et d'une base, à placer ledit mélange à proximité de ladite matière et à laisser le mélange réagir à la température ambiante pour produire de l'ammoniac, de manière que cet ammoniac entre en contact avec ladite matière pour en effectuer l'amélioration nutritionnelle.

2. Procédé suivant la revendication 1, caractérisé en outre en ce que de l'eau est ajoutée comme corps co-réactionnel au sel d'ammonium et à la base.

3. Procédé suivant la revendication 2, caractérisé en outre en ce que la quantité d'eau ajoutée est au moins égle à 65% en poids sur la base du poids total de sel d'ammonium et de base.

4. Procédé suivant la revendication 1, caractérisé en outre en ce que le sel d'ammonium et la base sont mis en contact l'un avec l'autre et mélangés avec de la matière lignocellulosique humide.